Europäisches Patentamt

European Patent Office

Office européen des brevets

(11) Veröffentlichungsnummer: **0 275 942**

**A2**

(12) **EUROPÄISCHE PATENTANMELDUNG**

(21) Anmeldenummer: **88100537.5**

(22) Anmeldetag: **15.01.88**

(51) Int. Cl.⁴: **G02B 6/38** , G02B 6/42

(30) Priorität: **20.01.87 US 5053**

(43) Veröffentlichungstag der Anmeldung:
**27.07.88 Patentblatt 88/30**

(84) Benannte Vertragsstaaten:
**AT BE CH DE ES FR GB GR IT LI LU NL SE**

(71) Anmelder: **Siemens Aktiengesellschaft Berlin
und München
Wittelsbacherplatz 2
D-8000 München 2(DE)**

Anmelder: **IBM INTERNATIONAL BUSINES
MACHINES CORPORATION
P.O. Box 950
Poughkeepsie, NY 12602(US)**

(72) Erfinder: **Schulz, Dietmar
Allgäuerstrasse 59
D-8000 München 71(DE)**
Erfinder: **Pohl, Peter
Gaghoferstrssse 15 1/5
D-8035 Stockdorf(DE)**
Erfinder: **Johnson, Alfred
30 Brocland Road
Poughkeepsie, N.Y. 12602(US)**

(74) Vertreter: **Mehl, Ernst, Dipl.-Ing. et al
Postfach 22 01 76
D-8000 München 22(DE)**

(54) Lichtwellenleiter-Steckverbindung.

(57) Neben Steckverbinderhälften, die am Frontende stift-oder buchsenförmige Steckerteile aufweisen, sind erste und zweite Hilfskörper vorgesehen, von denen der erste Hilfskörper mit einem buchsenförmigen Steckerteil mittels einer quer zur Steckrichtung zusammenfügbaren Nut-Steg-Verzahnung verbunden werden kann und einen Einschubkanal für eine Steckverbinderhälfte mit stiftförmigem Steckerteil aufweist. Der zweite Hilfskörper mit einem konzentrischen Führungsrohr zum Einstecken von stiftförmigen Steckerteilen von beiden Seiten her, weist an beiden Enden eine Steg-Nut-Verzahnungskontur auf, die mit der eines buchsenförmigen Steckerteils übereinstimmt. Der erste Hilfskörper kann daher wahlweise mit zweiten Hilfskörpern oder buchsenförmigen Steckerteilen verzahnt werden, wodurch einerseits Lichtwellenleitereinzel-oder Doppelstecker an Sende-und/oder Empfangsmodule angeschlossen als auch Lichtwellenleitereinzel-oder Doppelstecker zusammengesteckt werden können.

FIG 1

## Lichtwellenleiter-Steckverbindung

Die Erfindung bezieht sich auf eine Lichtwellenleiter-Steckverbindung mit Steckverbinderhälften, die an einem Frontende wenigstens einen entweder stift-oder buchsenförmigen Steckerteil aufweisen.

Eine solche Lichtwellenleiter-Steckverbindung ist aus der DE-OS 29 39 231 bekannt. Die Steckverbinderhälften mit buchsenförmigem Steckerteil sind bei dieser bekannten Steckverbindung baulich mit Sende-bzw. Empfangsmodulen verbunden, die elektro-optische und opto-elektrische Wandler realisieren. Das Einstecken der stiftförmigen Steckerteile der als Doppelstecker ausgebildeten Steckverbinderhälfte in die buchsenförmigen Steckerteile bewirkt, daß jeweils ein elektro-optischer Wandler bzw. ein opto-elektrischer Wandler an eine lichtleitende Faser, deren Endabschnitt in einem stiftförmigen Steckerteil konzentrisch fixiert ist, angeschlossen wird.

Im Zuge einer Lichtwellenleiterübertragungsstrecke ist es aber häufig erforderlich, die Stirnfläche einer lichtleitenden Faser mit der Stirnfläche einer weiteren lichtleitenden Faser in Verbindung zu bringen, um z.B. eine optische Übertragungsstrecke zu verlängern.

Aufgabe vorliegender Erfindung ist es daher, eine Lichtwellenleiter-Steckverbindung der eingangs genannten Art so auszugestalten, daß wenigstens ein stiftförmiges Steckerteil wahlweise mit einem buchsenförmigen Steckerteil oder einem weiteren stiftförmigen Steckerteil betriebssicher zusammengesteckt werden kann.

Erfindungsgemäß ergibt sich die Lösung dieser Aufgabe dadurch, daß die Steckerverbinderhälfte mit buchsenförmigem Steckerteil mit einem ersten von zwei Hilfskörpern mittels einer quer zur Steckachse zusammenfügbaren Steg-Nut-Verzahnung verbindbar ist, daß der erste Hilfskörper einen Einschubkanal für eine Steckverbinderhälfte mit wenigstens einem stiftförmigen Steckerteil aufweist und daß ein zweiter Hilfskörper mit einem konzentrischen Führungsrohr zum Einstecken stiftförmiger Steckerteile von beiden Seiten her vorgesehen ist und an beiden Enden eine Verzahnungskontur aufweist, die mit der Steg-Nut Verzahnungskontur der Steckverbinderhälfte mit buchsenförmigem Steckerteil übereinstimmt.

Durch diese Ausbildung einer Lichtwellenleiter-Steckverbindung ist es insbesondere mit Hilfe der zweiten Hilfskörper möglich, je einen ersten Hilfskörper mit einem der beiden Enden des zweiten Hilfskörpers über eine quer zur Steckachse zusammenfügbare Steg-Nut-Verzahnung zu verbinden und, da die ersten Hilfskörper einen Einschubkanal zur Aufnahme einer Steckverbinderhälfte mit wenigstens einem stiftförmigen Steckerteil aufweisen, in einen solchen ersten Hilfskörper dann jeweils eine Steckverbinderhälfte mit stiftförmigen Steckerteilen einzustecken. Verbindet man dagegen ein buchsenförmiges Steckerteil mit einem ersten Hilfskörper über die quer zur Steckachse zusammenfügbare Steg-Nut-Verzahnung, dann erhält man eine Verbindung zwischen einem Sende-oder Empfangsmodul, das mit buchsenförmigem Steckerteil ausgerüstet ist und einer Steckverbinderhälfte mit stiftförmigem Steckerteil. Durch die gleiche Verzahnungsstruktur an einem buchsenförmigen Steckerteil und an beiden Enden des zweiten Hilfskörpers sind nämlich diese Teile in bezug auf einen ersten Hilfskörper gegeneinander austauschbar.

In weiterer Ausgestaltung der Erfindung kann vorgesehen sein, daß für eine als Doppelstecker ausgebildete Steckverbinderhälfte mit stiftförmigen Steckerteilen der erste Hilfskörper einen dem Doppelstecker angepaßten Einschubkanal hat und mit zwei nebeneinander vorgesehenen Steg-Nut-Verzahnungskonturen versehen ist.

Dies ermöglicht es vorteilhaft ein Sende-und ein Empfangsmodul mit jeweils diesen Modulen zugeordneten buchsenförmigen Steckerteilen jeweils über eine eigene Steg-Nut-Verzahnungskontur mit dem ersten Hilfskörper zu verbinden.

Schließlich kann im Rahmen vorliegender Erfindung noch vorgesehen sein, daß zwischen zusammengefügten Stegen und Nuten der Verzahnungskonturen eine Preßpassung vorgesehen ist und daß freie Enden der Stege eine keilförmige Zuspitzung aufweisen.

Durch die Preßpassung werden die über die Steg-Nut-Verzahnung zusammengefügten Teile automatisch aneinandergehalten und die keilförmige Zuspitzung der freien Enden der Stege ermöglicht es, die Stege trotz der Preßpassung relativ unkompliziert in die Nuten der Steg-Nut-Verzahnungskonturen einzuschieben.

Ausführungsbeispiele der Erfindung werden nachfolgend anhand von fünf Figuren noch näher erläutert.

Dabei zeigen, jeweils mehr oder weniger stark vergrößert und in schematischer Darstellung,

Fig. 1 eine Ansicht von oben auf eine Lichtwellenleiter-Steckverbindung, bei der ein erster Hilfskörper mit einem buchsenförmigem Steckerteil über eine Steg-Nut-Verzahnung verbunden und eine Steckverbinderhälfte mit stiftförmigem Steckerteil in den ersten Hilfskörper eingeschoben und mit seinem stiftförmigen Steckerteil in das buchsenförmige Steckerteil eingesteckt ist,

Fig. 2 eine Ansicht von oben auf zwei zweite Hilfskörper, die auf einer Seite über Steg-Nut-Verzahnungen mit einem zur Aufnahme eines Lichtwellenleiterdoppelsteckers bemessenen ersten Hilfskörper und auf iher anderen Seite jeweils mit einem zur Aufnahme einer Steckerverbinderhälfte mit einem einzigen stiftförmigen Steckerteil bemessenen ersten Hilfskörper verbunden sind.

Fig. 3 eine Seitenansicht der in Fig. 2 dargestellten Teile aus der die Verzahnungsbegrenzung durch eine Wand der ersten Hilfskörper ersichtlich ist und

Fig. 4 und Fig. 5 weitere Verbindungsmöglichkeiten zwischen ersten und zweiten Hilfskörpern.

Im einzelnen ist den Figuren zu entnehmen, daß ein zweiter Hilfskörper 1, der z.B. aus Metall oder Kunststoff bestehen kann, quaderförmig ausgebildet ist und ein den Körper 1 zwischen zwei Stirnseiten 2 durchsetzendes Führungsrohr 3 aufweist, das konzentrisch zu einer Längsachse 4 des Körpers 1 verläuft. Dieses Rohr 3 kann z.B. durch einen Hartmetalleinsatz im Körper 1 realisiert sein. In zwei voneinander abgewandten Seitenflächen 5 des Körpers 1, die parallel zur Längsachse 4 gerichtet sind, sind jeweils zwei zueinander parallele Nuten 6 vorgesehen, die quer zum Rohr 3 verlaufen. Je eine Nut 6 ist auf jeder Seite 5 jeweils in der Nähe einer Stirnseite 2 vorgesehen, so daß zwischen einer Nut 6 und einer Stirnseite 2 ein Steg 7 gebildet wird.

Neben diesen zweiten Körpern 1 sind ebenfalls aus Metall oder Kunststoff bestehende erste Hilfskörper 8, 8a vorgesehen. An einer quer zur Längsachse 11 eines Körpers 8, 8a gerichteten Stirnseite 9 ist ein Einschubkanal 10, der von dem Körper 8, 8a umschlossen wird, zugänglich. In diesen Einschubkanal 10 kann von der Seite 9 der Körper 8, 8a her eine Lichtwellenleiter-Steckverbinderhälfte 12 mit wenigstens einem stiftförmigen Steckerteil 13 eingeschoben werden.

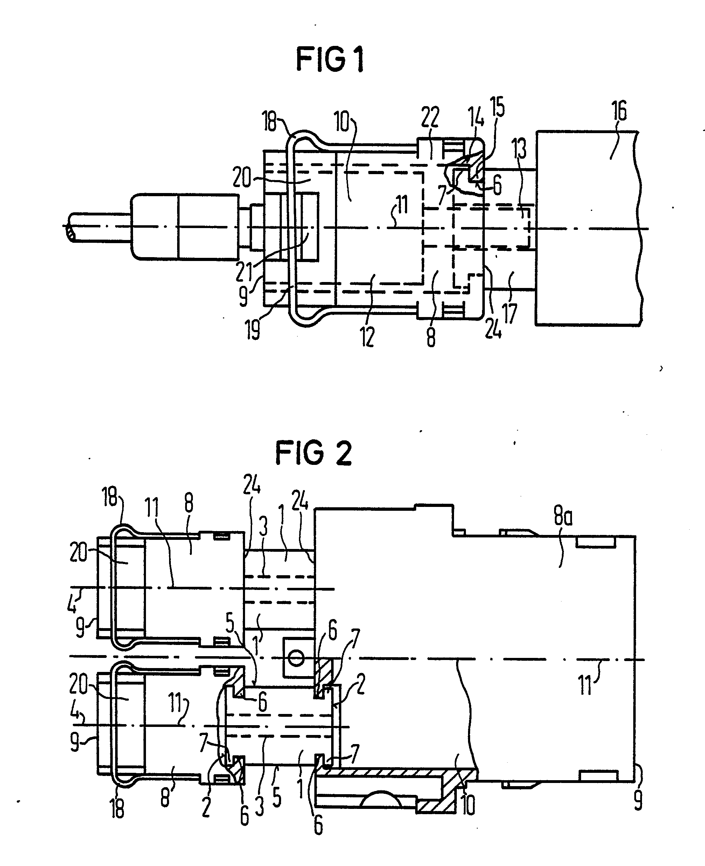

Anstelle eines ersten Körpers 8, dem eine Lichtwellenleiter-Steckverbinderhälfte mit einem einzigen stiftförmigen Steckerteil 13 zugeordnet werden kann, ist es möglich, auch (wie Fig. 2 zeigt) einen ersten Körper 8a vorzusehen, der eine Lichtwellenleiter-Doppelsteckverbinderhälfte mit zwei stiftförmigen Steckerteilen aufnehmen kann.

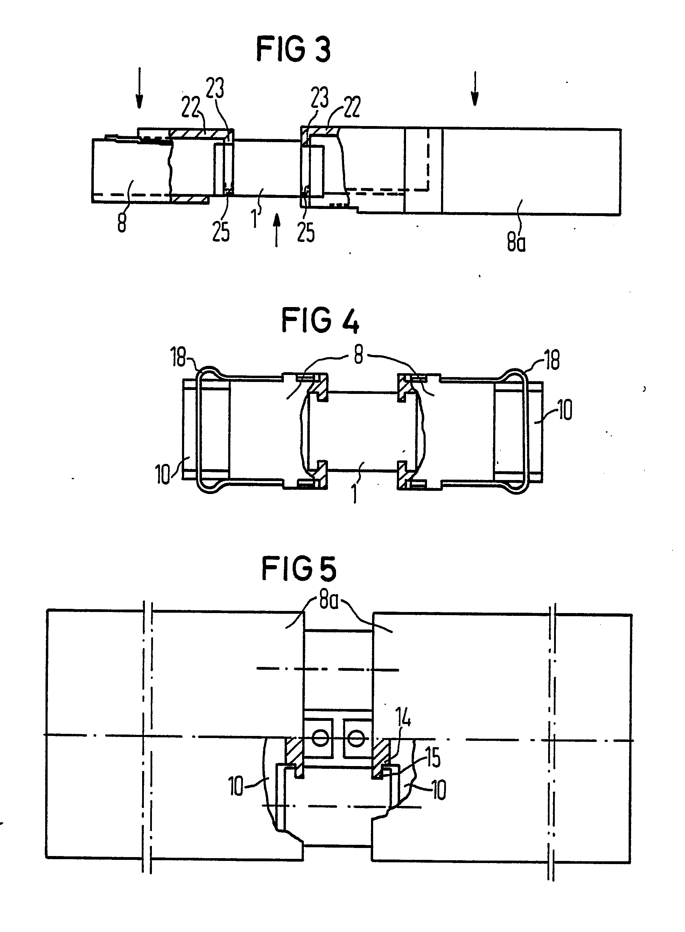

An der von der Seite 9 abgewandten Seite 24 ist jeder Körper 8 bzw. 8a mit einer (nämlich bei einer Steckverbinderhälfte mit einem stiftförmigen Steckerteil) oder zwei nebeneinander angeordneten (nämlich bei einem Körper 8a, der zur Aufnahme einer Steckverbinderhälfte mit zwei stiftförmigen Steckerteilen ausgebildet ist) Steg-Nut-Verzahnungskonturen 14, 15 versehen, die zu der Steg-Nut-Verzahnungskontur 6, 7 des Körpers 1 komplementär ausgebildet sind. Da auch eine Steckverbinderhälfte 16 mit buchsenförmigem Steckerteil 17 eine Nut-Steg-Verzahnungskontur 6, 7 hat, die mit der Verzahnungskontur eines Körpers 1 übereinstimmt, können die Körper 8, 8a wahlweise mit einem Körper 1 oder mit einer Steckverbinderhälfte 16 mit buchsenförmigem Steckerteil 17 verbunden werden. Dadurch ist es möglich, z.B. eine Steckverbinderhälfte, die zwei nebeneinander angeordnete stiftförmige Steckerteile aufweist, an zwei Steckverbinderhälften mit jeweils einem einzigen stiftförmigen Steckerteil anzuschließen (eine solche Kombination von Körpern 1 und Körpern 8, 8a ist z.B. in Fig. 2 dargestellt) oder zwei Körper 8a über zwei Körper 1 miteinander zu verbinden (Fig. 5), so daß zwei Steckverbinderhälften mit jeweils zwei stiftförmigen Steckerteilen zusammengesteckt werden können. Auch kann mit einem Körper 8a sowohl ein Körper 1 als auch eine Steckverbinderhälfte 16 mit buchsenförmigem Steckerteil 17 verbunden werden, da die Verzahnungskontur der Steckverbinderhälfte 16 derjenigen eines Körpers 1 entspricht. Wird auf beiden Seiten eines Körpers 1 ein Körper 8 angeschlossen (Fig. 4), so können dadurch zwei Steckverbinderhälften mit jeweils einem stiftförmigen Steckerteil miteinander verbunden werden

Die Steg-Nut-Verzahnung hält im ineinandergeschobenen Zustand, der durch eine Bewegung der zu verzahnenden Teile mit der in Fig. 3 durch Pfeile angedeuteten Bewegungsrichtung erreicht wird, die verzahnten Teile in Richtung der Achsen 4, 11 aneinander und ist gegen ein Auseinandergleiten der verzahnten Teile durch eine Preßpassung, insbesondere zwischen dem Steg 15 eines Körpers 8 bzw. 8a und einer Nut 6 eines Körpers 1 oder eines Steckerteils 17, gesichert. Das Einfädeln eines Stegs 15 in eine Nut 6 wird durch eine keilförmige Zuspitzung 25 des Steges 15 (Fig. 3) erleichtert.

Zum Festhalten einer Steckverbinderhälfte 12 mit einem stiftförmigen Steckerteil 13 trägt ein Körper 8 einen Bügel 18, der mit einem Querstück 19 ein Fenster 20 im Körper 8 überbrückt und hinter einem an der Steckverbinderhälfte 12 vorgesehenen Vorsprung 21 einrastet.

Die quer zu den Achsen 4 bzw. 11 gerichtete Steg-Nut-Verzahnungskontur ist bei den Körpern 8, 8a auf einer Seite durch eine Wand 22 (Fig. 3), die sich parallel zu den Achsen 11 bzw. 4 erstreckt, abgedeckt, so daß sich beim Ineinanderschieben der Verzahnungskonturen einer Steckverbinderhälfte 16 oder eines Körpers 1 und einer Verzahnungskontur eines Körpers 8 oder 8a ein Anschlag 23 ergibt, der das Ineinanderschieben der Verzahnungskonturen in der optimalen Lage der Körper 8, 8a bezüglich eines Körpers 1 oder einer Steckverbinderhälfte 16 begrenzt.

**Ansprüche**

1. Lichtwellenleiter-Steckverbindung mit Steckverbinderhälften, die an einem Frontende wenigstens einen entweder stift-oder buchsenförmigen Steckerteil aufweisen **dadurch gekenzeichnet,** daß die Steckverbinderhälfte (16) mit buchsenförmigem Steckerteil (17) mit einem ersten Hilfskörper (8, 8a) von zwei Hilfskörpern mittels einer quer zur Steckachse (11) zusammenfügbaren Steg-Nut Verzahnung (6, 7; 14, 15) verbindbar ausgebildet ist, daß der erste Hilfskörper (8, 8a), einen Einschubkanal (10) für eine Steckverbinderhälfte mit wenigstens einem stiftförmigen Steckerteil (12) aufweist und daß ein zweiter Hilfskörper (1) mit einem Führungsrohr (3) zum Einstecken stiftförmiger Steckerteile (13) von beiden Seiten (2) her vorgesehen ist und an beiden Enden eine Verzahnungskontur (5, 6) aufweist, die mit der Steg-Nut-Verzahnungskontur (5, 6) der Steckverbinderhälfte mit buchsenförmigem Steckerteil (17) übereinstimmt.

2. Lichtwellenleiter-Steckverbindung nach Anspruch 1, **dadurch gekennzeichnet,** daß für eine als Doppelstecker ausgebildete Steckverbinderhälfte mit stiftförmigen Steckerteilen (13) der erste Hilfskörper (8a) einen dem Doppelstecker angepaßten Einschubkanal (10) hat und mit zwei nebeneinander vorgesehenen Steg-Nut-Verzahnungskonturen (14, 15) versehen ist.

3. Lichtwellenleiter-Steckverbindung nach einem der Ansprüche 1 oder 2, **dadurch gekennzeichnet,** daß zwischen zusammengefügten Stegen (15) und Nuten (6) der Verzahnungskonturen eine Preßpassung vorgesehen ist und daß freie Enden der Stege (15) eine keilförmige Zuspitzung (25) aufweisen.

# FIG 1

# FIG 2

## FIG 3

## FIG 4

## FIG 5